Europäisches Patentamt

European Patent Office

Office européen des brevets

(19)

(11) Veröffentlichungsnummer: **0 210 368**
**A1**

(12) **EUROPÄISCHE PATENTANMELDUNG**

(21) Anmeldenummer: 86107071.2

(22) Anmeldetag: 23.05.86

(51) Int. Cl.⁴: **G 11 B 33/04**

(30) Priorität: 02.08.85 DE 3527737

(43) Veröffentlichungstag der Anmeldung:
04.02.87 Patentblatt 87/6

(84) Benannte Vertragsstaaten:
AT BE CH FR GB IT LI LU NL SE

(71) Anmelder: HAN-BÜROGERÄTE GmbH & Co. KG
Töpferstrasse 2-4
D-4800 Bielefeld 1(DE)

(72) Erfinder: Niehaus, Hans-Benno
Eckendorfer Strasse 103 a
D-4800 Bielefeld 1(DE)

(74) Vertreter: König, Norbert, Dipl.-Phys. Dr. et al,
Patentanwälte Leine & König Burckhardtstrasse 1
D-3000 Hannover 1(DE)

(54) Kassette für plattenförmige Gegenstände, insbesondere Disketten.

(57) Eine Kassette (1) zur Aufnahme von plattenförmigen Gegenständen, insbesondere von Disketten, weist einen Unterkasten (2), einen drehbar im Unterkasten angeordneten Schwenkdecke (3) sowie eine drehbar im Schwenkdeckel (3) angeordnete Stützklappe (4) auf, die mit einem Aufstellboden (13) versehen ist. Im Rand des Aufstellbodens der Stützklappe sind Ausnehmungen vorgesehen, in die am Schwenkdeckel angebrachte Vorsprünge eingreifen. Die Seitenwände der Stützklappe weisen Ausnehmungen auf, in die auf der Innenseite der Seitenwände des Schwenkdeckels (3) angebrachte Stege eingreifen. Die Kassette (1) zeichnet sich durch einen sehr einfachen Aufbau aus. Ein Einklemmen der plattenförmigen Gegenstände bzw. der Disketten beim Schließen des Aufnahmefaches der Kassette (1) ist nicht mehr möglich.

Fig. 1

EP 0 210 368 A1

LEINE & KÖNIG

PATENTANWÄLTE

0210368

Dipl.-Ing. Sigurd Leine · Dipl.-Phys. Dr. Norbert König

Burckhardtstraße 1          Telefon (05 11) 62 30 05
D-3000 Hannover 1

—1—

HAN-BÜROGERÄTE GmbH & Co.KG

Unser Zeichen          Datum

726/3 EP          20. Mai 1986

Kassette für plattenförmige Gegenstände,
insbesondere Disketten

Die Erfindung betrifft eine Kassette gemäß Oberbegriff des Anspruchs 1.

Durch die EP-A-838901104 (0 130 266) ist eine Kassette
zur Aufnahme plattenförmiger Gegenstände, insbesondere Disketten bekannt. Die Kassette besteht aus einem Unterkasten,
der rundherum geschlossen ausgebildet ist. Ein Schwenkdeckel ist um seitliche feste Drehpunkte nach hinten schwenkbar ausgebildet. Die Kassette weist ferner eine Stützklappe
mit einem etwa senkrecht abstehenden Aufstellboden auf. Der
Aufstellboden liegt in einer Führungsnut an der unteren Kante
des Schwenkdeckels. Die Stützklappe ist mit zwei seitlichen
Führungszapfen versehen, die in seitlichen Kurvenführungen
des Unterkastens geführt sind. Außerdem ist die Stützplatte
mit Hilfe zweier seitlicher gekrümmter Nasen in entsprechenden Ausnehmungen in seitlichen Flanschen des Schwenkdeckels
geführt. Die Kurvenführung erfolgt dabei so, daß die Stützplatte erst im letzten Teil der Kurvenführung bzw. des Schwenkbereiches des Schwenkdeckels nach vorn selbständig wegschwenkt.
Diese bekannte Kassette weist einen relativ komplizierten
Aufbau, insbesondere für die Zwangsführung von Schwenkdeckel
und Stützklappe auf, wodurch sich ein relativ großer Herstellungsaufwand ergibt. Der komplizierte Aufbau macht die
Kassette auch störanfällig. Im Bereich der Führungsnut für
das freie Ende des Aufstellbodens besteht die Gefahr des

Dr.K./H.                                              -2-

0210368

Verklemmens von dünnen Gegenständen, beispielsweise Leitregister

Die DE-AS 1 176 095 zeigt einen Karteikasten für Kleinkarteien. Der Karteikasten weist einen Unterkasten, einen hochschwenkbaren Deckel und eine Stützplatte auf. Der hochschwenkbare Deckel ist mit einem Aufstellboden versehen, an dem die Stützplatte angelenkt ist. Der Schwenkdeckel ist kastenartig wie der Unterkasten ausgebildet, praktisch komplementär zum Unterkasten. Er ist an der unteren Kante seiner Rückwand gelenkig mit der oberen Kante der Rückwand des Unterkastens verbunden. Die Stützplatte weist seitlich Streben auf, die zwischen der Seitenwand des Unterkastens und einer daran befestigten Lasche geführt sind. Die Offenstellung des Schwenkdeckels ist nicht definiert. Lediglich, wenn der Karteikasten auf einer Unterlage aufliegt, stützt sich der Schwenkdeckel mit seiner hinteren oberen Kante in der Offenstellung auf der Unterlage ab. Der bekannte Karteikasten weist noch einen relativ komplizierten Aufbau auf. Ein ordnungsgemäßes Hochschwenken des durch den Schwenkdeckel und die Stützplatte gebildeten Aufnahmefaches für die Karteikarten ist nur möglich, wenn der Karteikasten auf einer Unterlage aufliegt, beispielsweise einem Tisch. Es besteht die Möglichkeit der Gefahr eines Verklemmens von Karteikarten zwischen Schwenkdeckel und Stützplatte.

Die DE-OS 2 202 349 zeigt einen schließbaren Karteikasten zum Ablesen von Karteikarten in seiner geöffneten Stellung. Der Karteikasten weist einen Unterkasten, einen Schwenkdeckel und eine Stützklappe auf, die einen Aufstellboden aufweist. Ein Scharnier verbindet den Aufstellboden der Stützklappe mit dem Schwenkdeckel. In der Offenstellung ist die leicht nach hinten geneigte Stellung des Schwenkdeckels mit Hilfe von Zapfen festgelegt, die in den Seitenwänden des Kastens angeordnet sind. In der Offenstellung klaffen der Schwenkdeckel und das Stützteil seitlich so weit auseinander, daß die Gefahr besteht, daß eingestellte Karteikarten zwischen Stützteil und Deckel eingeklemmt werden. Die Anschlagzapfen unterliegen einer großen Belastung. Durch Verwendung des gesondert mit dem Schwenkdeckel und der Stützklappe zu verbindenden Scharniers ergibt sich auch bei diesem bekannten Karteikasten ein erhöhter Herstellungsaufwand.

Die GB-PS 1 462 438 zeigt einen Karteikasten mit einem Unterkasten, einem Schwenkdeckel und einer Stützklappe. Der Schwenkdeckel ist mit Hilfe zweier Zapfen in den Seitenwänden des Unterkastens drehbar angeordnet. Sowohl der Schwenkdeckel als auch die Stützklappe sind mit Seitenwänden ausgestattet, wobei die Seitenwände der Stützklappe innerhalb der Seitenwände des Schwenkdeckels angeordnet sind. Der Schwenkdeckel und die Stützklappe sind schwenkbar miteinander verbunden. Hierzu weist der Schwenkdeckel auf der Innenseite seiner Seitenwände bogenförmige Rippen und die Stützklappe auf der Innenseite ihrer Seitenwände bogenförmige Nuten auf, die die bogenförmigen Rippen des Schwenkdeckels aufnehmen. Die Stellung des Schwenkdeckels in der Offenstellung wird bestimmt durch eine auf dem Boden des Unterkastens vorgesehene, quer verlaufende Rippe, die als Anschlag für die obere hintere Kante des Schwenkdeckels dient. Die Stützklappe ist mit einem Aufstellboden versehen, der etwa stumpf am Schwenkdeckel anliegt. Bei diesem bekannten Karteikasten besteht die Gefahr, daß zwischen Stützklappe und Schwenkdeckel, und zwar zwischen den Seitenwänden der Stützklappe und dem Schwenkdeckel sowie zwischen dem Ende des Aufstellbodens und dem Schwenkdeckel Karteikarten eingeklemmt werden. Die drehbare Verbindung zwischen Schwenkdeckel und Stützklappe mit Hilfe der bogenförmigen Rippen und Nuten ist relativ großflächig und damit stark reibungsbehaftet, was eine gewisse Schwergängigkeit bedingt. An der quer verlaufenden, auf dem Boden des Unterkastens angeordneten Anschlagrippe greifen relativ große Kräfte an, so daß die Gefahr eines schnellen Verschleißes besteht.

Die US-PS 4 478 335 zeigt eine Kassette zur Aufbewahrung von Disketten mit einem Unterkasten, einem Schwenkdeckel und einer Stützplatte. Der Schwenkdeckel weist Seitenwände auf, die mit Hilfe von Zapfen drehbar in den Seitenwänden des Unterkastens angeordnet sind. Die Stützklappe weist ebenfalls Seitenwände auf, die mit Hilfe von Zapfen in den Seitenwänden des Schwenkdeckels drehbar angeordnet sind. Die Stützklappe ist mit einem Aufstellboden versehen. Im Bereich des Aufstellbodens sind die Seitenwände der Stützklappe bogenförmig und mit einer Ausnehmung ausgebildet. Beim Verschwenken des Schwenkdeckels gleitet die Stützklappe mit dem bogenförmig ausgebildeten Teil ihrer Seitenwände auf gestuft ausgebildeten Erhebungen, die auf dem Boden des Unterkastens ausgebildet sind und als Anschläge für die Ausnehmungen in der Seitenwand der Stützklappe dienen. Diese Erhebungen dienen gleichzeitig als Anschlag für den Schwenkdeckel in dessen Offenstellung. Die bekannte Kassette ist relativ aufwendig gestaltet. Die gestuften Erhebungen auf dem Boden des Unterkastens unterliegen erhöhtem Verschleiß, wodurch die Gefahr besteht, daß die bekannte Kassette schnell funktionsuntüchtig wird. Es besteht überdies die Gefahr eines Verklemmens der in das Aufnahmefach zwischen Schwenkdeckel und Stützklappe eingestellten Gegenstände.

Die US-PS 4 356 918 zeigt einen Kassette zur Aufnahme von Disketten mit einem Unterkasten, der hinten offen ist, einem Schwenkdeckel und einer Stützklappe. Der Schwenkdeckel und die Stützklappe weisen Seitenwände auf, und die Stützklappe ist mit einem Aufstellboden versehen. Die schwenkbare Verbindung zwischen Schwenkdeckel und Stützklappe erfolgt über deren Seitenwände. Der Schwenkdeckel ist über seine Seitenwände schwenkbar mit den Seitenwänden des Unterkastens verbunden. Der Schwenkbereich der Stützklappe relativ zum Schwenkdeckel wird begrenzt durch Anschläge, die auf der Innenseite des Schwenkdeckels angeordnet sind und als Anschläge für den Aufstellboden der Stützklappe dienen. Um den Schwenkdeckel in die Offenstellung zu bringen, ist es notwendig, diesen um 270° relativ zum Unterkasten zu verschwenken. In dieser 270°-Schwenkstellung liegt der Schwenkdeckel an einer hinteren Kante des Bodens des Unterkastens an. Besonders nachteilig bei dieser bekannten Kassette ist, daß zum Öffnen der Kassette für die Gebrauchsstellung der Schwenkdeckel um 270° verschwenkt werden muß, um eine feste Lage einnehmen zu können. Die Anschläge für den Aufstellboden der Stützklappe sind stark beansprucht. Es besteht die Gefahr, daß zwischen den Seitenwänden der Stützklappe und dem Schwenkdeckel in die Kassette eingestellte Gegenstände eingeklemmt werden.

Die GB-PS 924 481 zeigt einen Karteikasten mit einem Unterkasten, einem Schwenkdeckel und einer Stützklappe. Der Schwenkdeckel ist mit einem Aufstellboden versehen. Schwenkdeckel und Stützteil weisen Seitenwände auf. Der Schwenkdeckel und der Stützteil sind mit Hilfe einer Achse schwenkbar miteinander verbunden. Die Achse ist in Seitenschlitzen der Seitenwände des Unterkastens verschiebbar geführt. Das Stützteil wird in der Offenstellung abgestützt mit Hilfe einer Platte, die gelenkig mitdem Stützteil verbunden ist und außerdem über eine Achse drehbar mit dem Unterkasten verbunden ist. Der bekannte Karteikasten weist einen relativ komplizierten Aufbau auf, insbesondere durch die drei vorgesehenen Schwenkachsen und die Kulissenführung der einen Achse. Es besteht die Gefahr, daß zwischen Stützteil und Schwenkdeckel die eingestellten Gegenstände eingeklemmt werden.

Der vorliegenden Erfindung liegt die Aufgabe zugrunde,

0210368

eine Kassette der eingangs genannten Art so auszubilden, daß der Herstellungsaufwand verringert ist, jedoch gleichzeitig eine verbesserte Aufnahme der plattenförmigen Gegenstände unter Vermeidung der Gefahr eines Verklemmens erzielt wird.

Diese Aufgabe wird durch die Ausbildung gemäß Kennzeichen des Anspruchs 1 gelöst.

Die erfindungsgemäße Kassette zeichnet sich durch eine stark vereinfachte Ausbildung aus. Es sind keine Kulissenführungen, Kurven, Gleitflächen und Anschläge mehr notwendig, wodurch der Herstellungsaufwand sowie die Verschleiß- und Störanfälligkeit erheblich verringert sind. Ein Verklemmen von Disketten oder plattenförmigen Gegenständen zwischen dem Schwenkdeckel und der Stützklappe ist ausgeschlossen.

Vorteilhafte und zweckmäßige Weiterbildungen der erfindungsgemäßen Aufgabenlösung sind in den Unteransprüchen gekennzeichnet.

Eine besonders vorteilhafte und leicht handhabbare Verriegelungsvorrichtung für den Schwenkdeckel ist in den Ansprüchen 11 - 19 angegeben.

Die Erfindung soll nachfolgend anhand der beigefügten Zeichnung näher erläutert werden.

Es zeigt

Fig. 1 eine perspektivische Darstellung einer Kassette im geöffneten Zustand, wobei Teile der Kassette im weggebrochenen Zustand dargestellt sind, um Einzelheiten des Aufbaues besser zeigen zu können,

Fig. 2 eine perspektivische Darstellung von Teilen der Kassette nach Fig. 1, aus der die Art und Weise des Einsetzens und der Anordnung des Deckels im Unterkasten der Kassette ersichtlich ist,

0210368

Fig. 3  eine Seitenansicht der Kassette nach

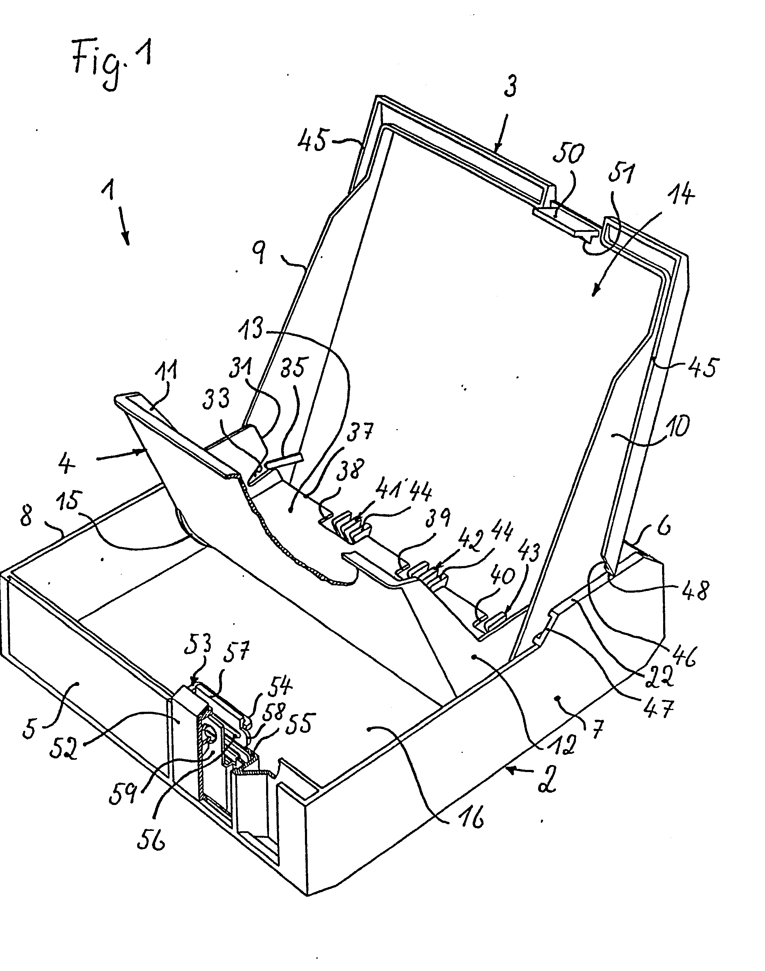

        Fig. 1, teilweise im Schnitt,

Fig. 4  eine Seitenansicht der Kassette nach
        Fig. 1, teilweise im Schnitt, in
        teilweise geöffneter Stellung,

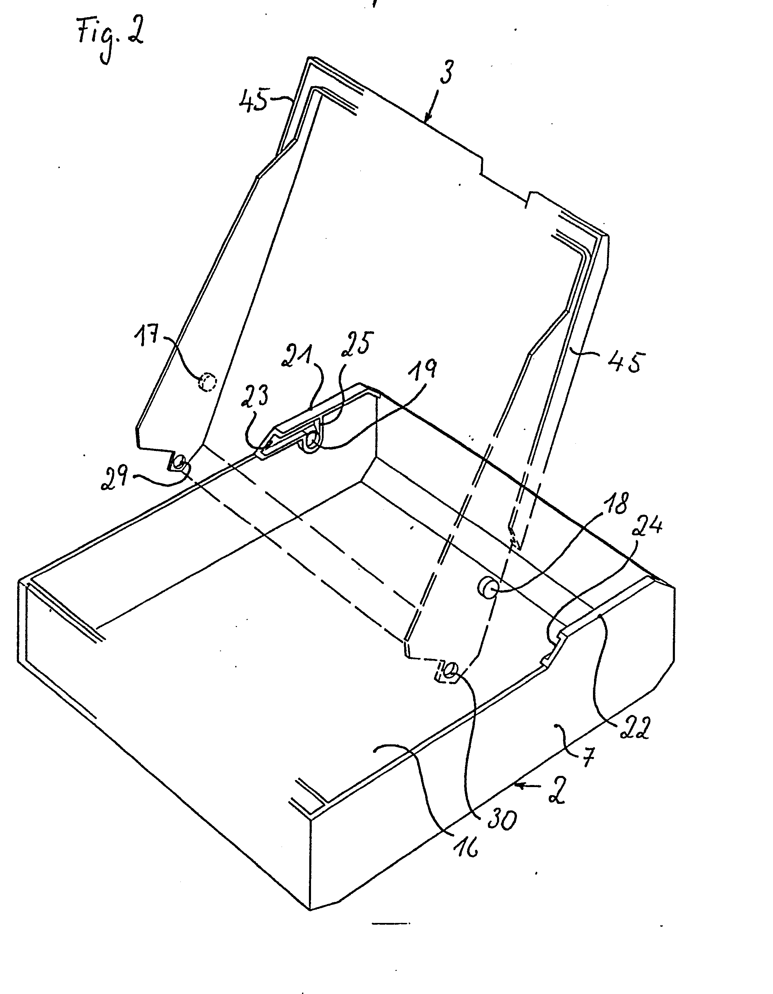

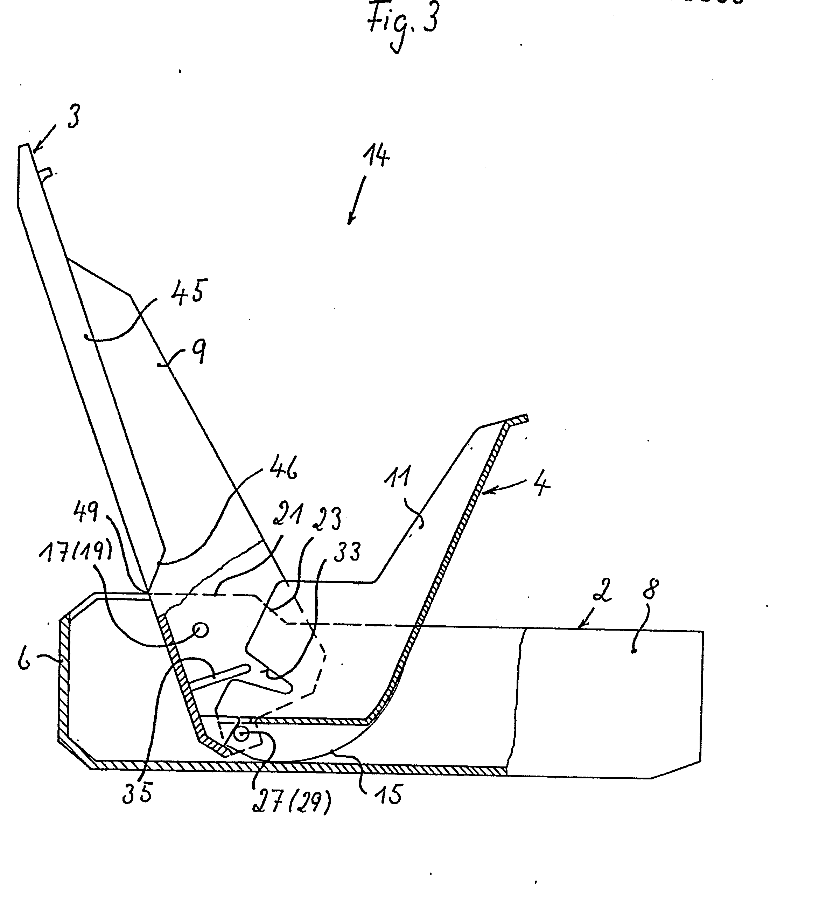

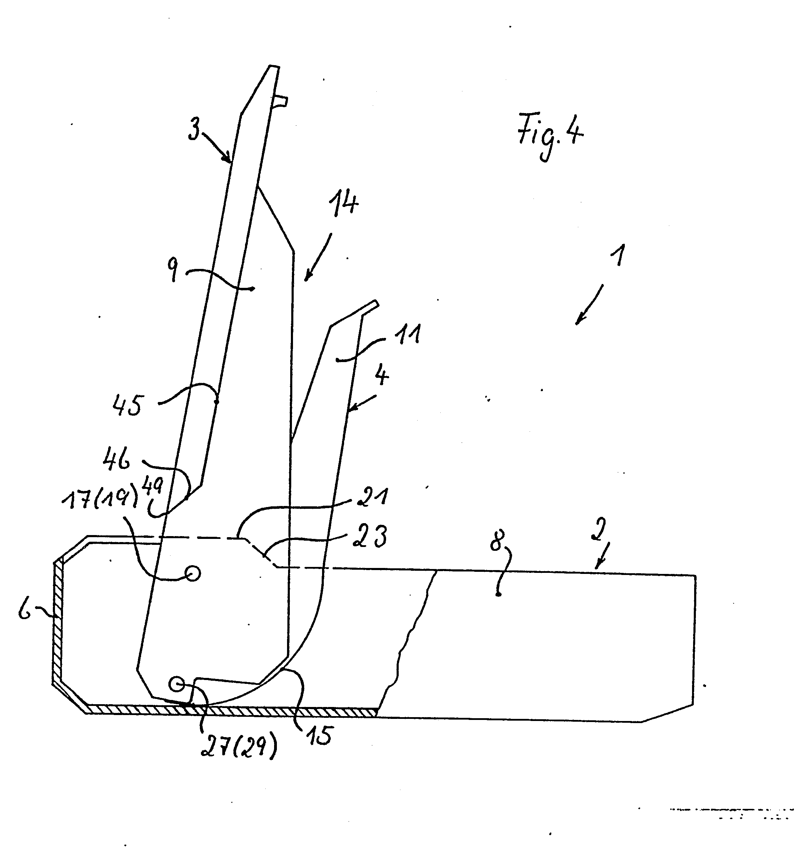

Fig. 5  eine Seitenansicht der Kassette nach
        Fig. 1, teileweise im Schnitt, im
        geschlossenen Zustand,

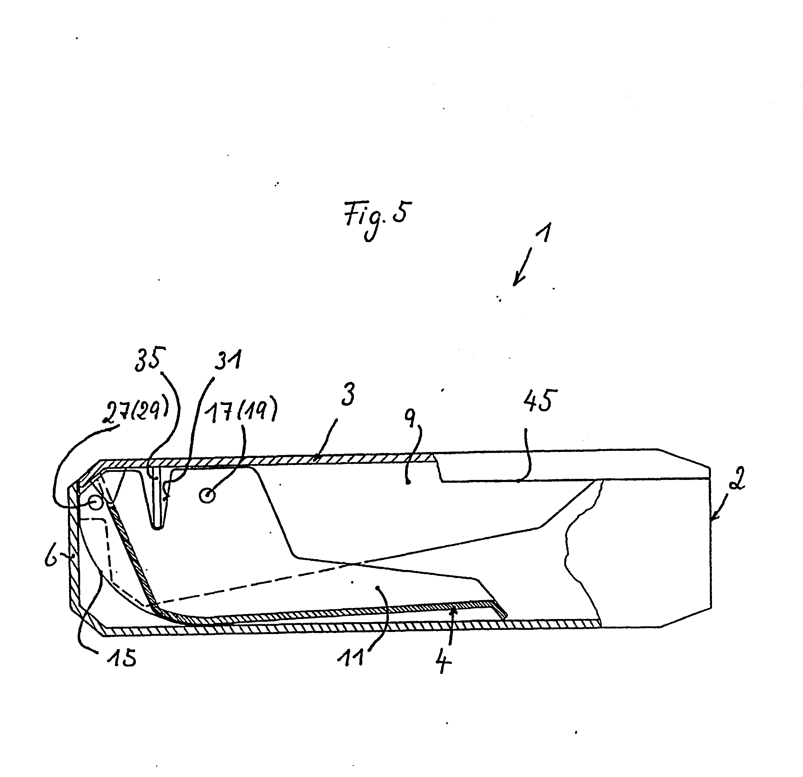

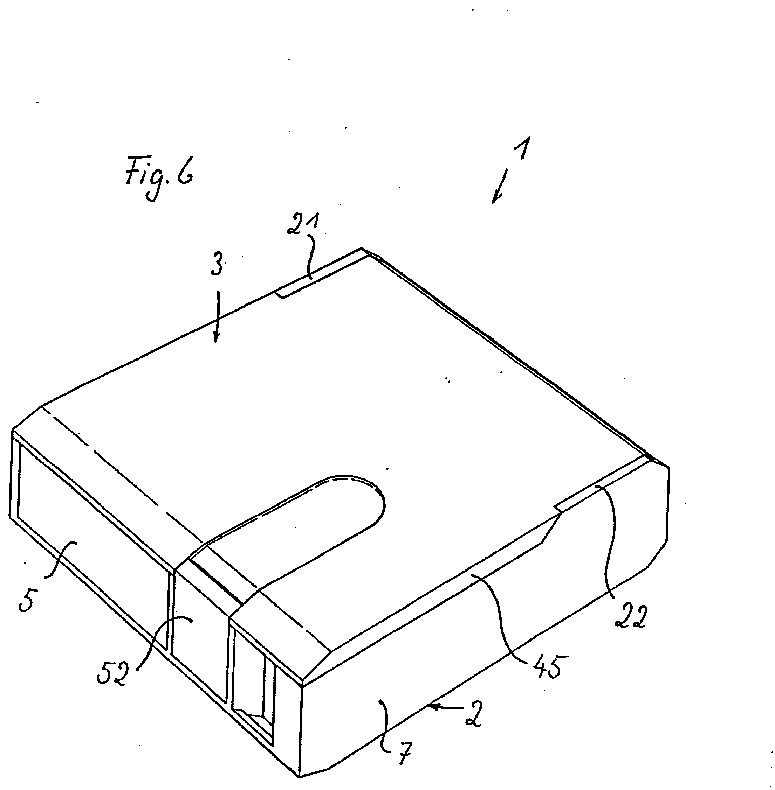

Fig. 6  eine perspektivische Ansicht der
        geschlossenen Kassette,

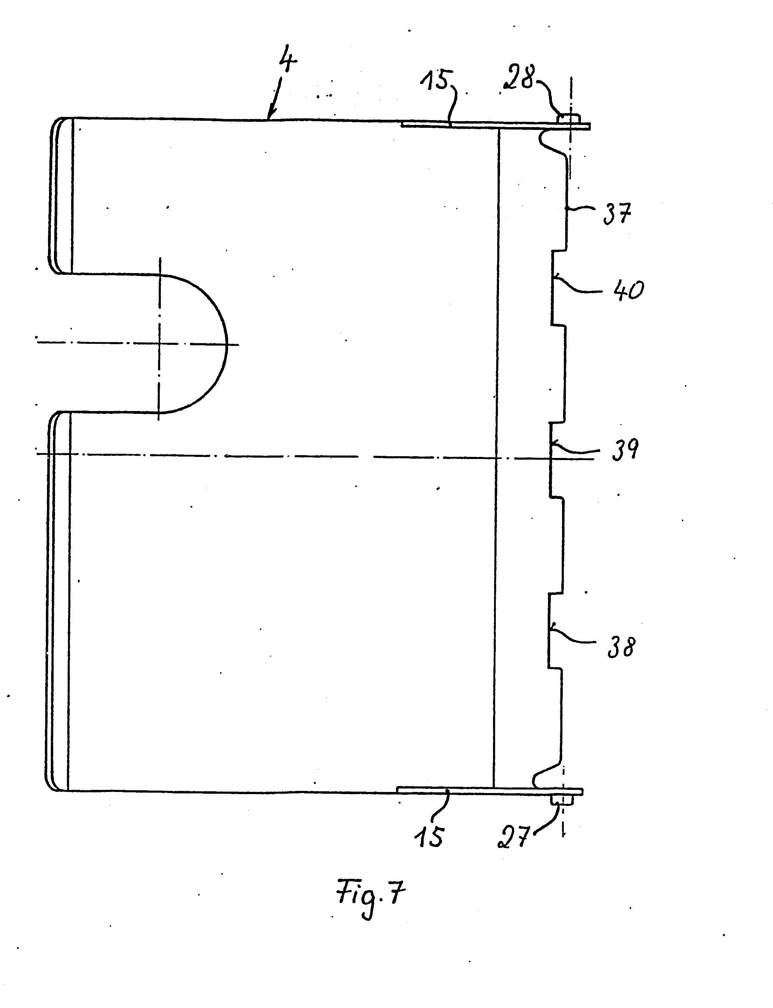

Fig. 7  eine Draufsicht auf die bei der Kassette
        nach Fig. 1 verwendete Stützklappe und

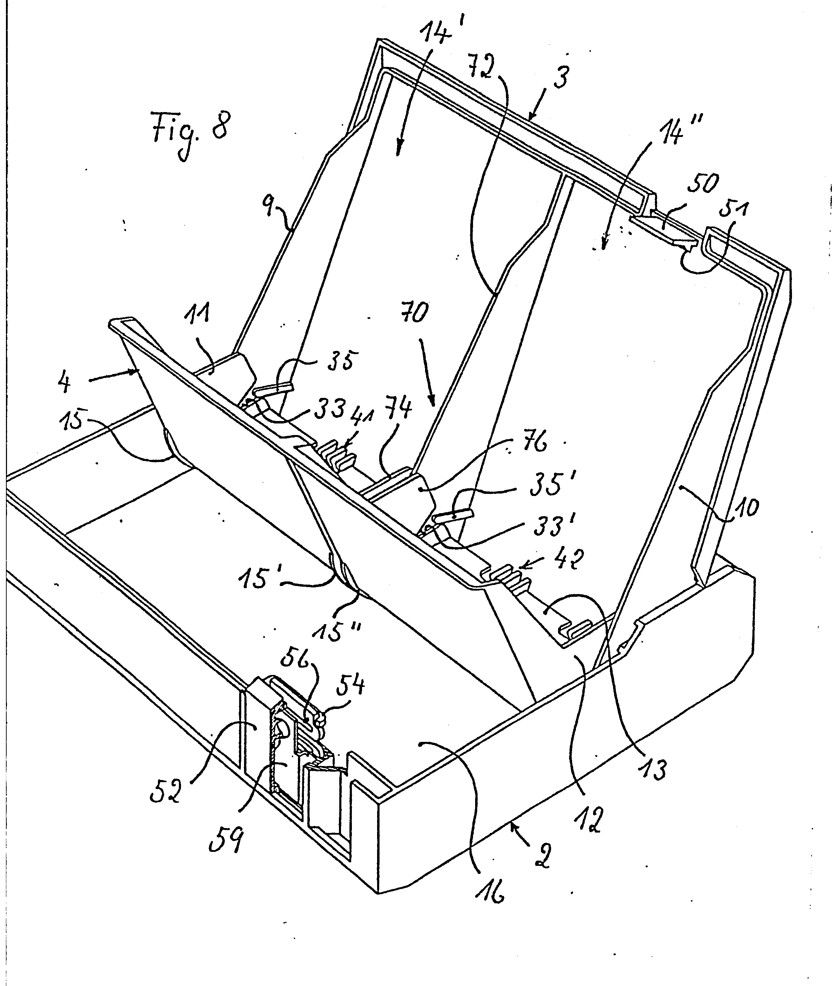

Fig. 8  eine Doppelkassette.

Die Zeichnung zeigt eine Kassette 1 mit einem Unterkasten 2, einem Schwenkdeckel 3 und einer Stützklappe 4.
Der Unterkasten weist eine Vorderwand 5, eine Rückwand 6
und Seitenwände 7 und 8 auf. Der Schwenkdeckel 3 ist mit
Seitenwänden 9 und 10 und die Stützklappe mit Seitenwänden
11 und 12 versehen. Die Stützklappe 4 ist ferner mit einem
Aufstellboden 13 ausgestattet. Die Höhe der Seitenwände
9 und 10 des Schwenkdeckels 3 nimmt von der hinteren Kante
bis zur vorderen Kante des Schwenkdeckels allmählich ab.
Die Seitenwände 11 und 12 der Stützklappe 4 weisen eine
von der Vorderkante zum Aufstellboden hin zunehmende Höhe
auf. Im Bereich des Aufstellbodens, der mit der Stützklappe einen stumpfen Winkel einschließt, ist die Höhe
der Seitenwände am größten und folgen die Seitenwände
etwa dem Verlauf des Aufstellbodens.

Der Schwenkdeckel 3 und die Stützklappe 4 bilden
ein Aufnahmefach 14 für plattenförmige Gegenstände, insbesondere Disketten.

Die Seitenwände 11, 12 der Stützklappe 4 sind über
den Aufstellboden 13 hinaus verlängert und zu kreisbogenförmigen Kufen 15 ausgebildet. Mit diesen Kufen gleitet
die Stützklappe 4 auf der Bodenfläche 16 des Unterkastens
beim nach oben Schwenken des Aufnahmefaches 14 oder stützt
sich mit diesen Kufen auf der Bodenfläche ab in der Offenstellung des Aufnahmefaches, wie dies später noch genauer
beschrieben wird.

Die kreisbogenförmigen Gleitflächen der Kufen liegen im geschlossenen Zustand des vom Schwenkdeckel 3 und der Stützklappe 4 gebildeten Aufnahmefaches 14, d.h. bei an den Schwenkdeckel herangeklappter Stützklappe, auf einem Kreisbogen um die Drehachse des Schwenkdeckels als Kreismitte.

Der Schwenkdeckel weist im hinteren Bereich außenseitig Zapfen 17 und 18 auf, die zur drehbaren bzw. schwenkbaren Lagerung des Deckels in zugeordnete Lager 19 einführbar sind, die an der Innenseite der Seitenwände des Unterkastens in dessen hinterem Bereich angeordnet sind. Die Seitenwände des Unterkastens weisen jeweils hierzu im hinteren Bereich eine Erhöhung 21 bzw. 22 auf, die innenseitig als nach vorn und nach innen offene sowie nach hinten geschlossene Kulissenführung 23 bzw. 24 ausgebildet ist, die am hinteren Ende in das Lager 19 übergeht, das unterhalb der Kulissenführung angeordnet ist. Zum Einsetzen des Schwenkdeckels 3 in den Unterkasten 2 wird der Deckel mit den Zapfen 17 und 18 von vorn in die Kulissenführung 23, 24 eingeführt und bis zur rückseitigen Abschlußwand 25 geschoben und dann nach unten in die Lager 19 eingerastet.

Vor der Montage des Deckels ist vorzugsweise die Stützklappe im Schwenkdeckel anzubringen. Hierzu weisen die Kufen 15 im Bereich der Kante des Aufstellbodens außenseitig kurze Zapfen 27 und 28 auf, die in komplementäre Ausnehmungen 29 und 30 einführbar sind. Diese Ausnehmungen sind in den Seitenwänden des Schwenkdeckels nahe deren hinterer Kante ausgebildet. Die Ausnehmungen 29 und 30 sind vorzugsweise Löcher und die Zapfen 27 und 28 haben vorzugsweise eine Länge, die der Stärke der Seitenwände des Schwenkdeckels entspricht.

Die Breite der Stützklappe bzw. der Abstand der Seitenwände 11 und 12 der Stützklappe ist geringer als die

0210368

lichte Weite zwischen den Seitenwänden 9 und 10 des Schwenkdeckels 3, so daß die Seitenwände der Stützklappe beim Verschwenken von Schwenkdeckel und Stützklappe relativ zueinander innerhalb der Seitenwände und unmittelbar vor den Seitenwänden des Schwenkdeckels laufen.

Im unteren Bereich des durch den Schwenkdeckel 3 und die Stützklappe 4 gebildeten Aufnahmefaches sind die Seitenwände des Schwenkdeckels und der Stützklappe so breit ausgebildet, daß stets eine gegenseitige Überlappung stattfindet.

Um zu verhindern, daß Disketten oder andere plattenförmige Gegenstände beim Schließen der Kassette eingeklemmt werden, sind die Seitenwände der Stützklappe an der zum Schwenkdeckel zeigenden Seite 31 bzw. 32 mit V-förmigen Ausnehmungen 33 versehen, in die auf der Innenseite der Seitenwände 9 und 10 des Schwenkdeckels ausgebildete Stege 35 eingreifen. Die den Seitenwänden des Schwenkdeckels abgewandte Seite der Stege fluchtet mit der Innenfläche der Seitenwände der Stützklappe. Hierdurch wird ein seitliches Einklemmen der Disketten oder anderer plattenförmiger Gegenstände verhindert. Außerdem weist der Aufstellboden 13 an seiner Kante 37 mehrere beabstandete (hier drei beabstandete) rechteckförmige Ausnehmungen 38, 39, 40 auf, in die auf der Innenseite des Schwenkdeckels 3 angeordnete Gruppen von Rippen 41, 42 und 43 eingreifen. Beim dargestellten Ausführungsbeispiel sind jeweils drei Rippen pro Gruppe vorgesehen. Die Rippen weisen eine obere Aufstellfläche 44 auf, die mit dem Schwenkdeckel einen stumpfen Winkel einschließt. Dieser stumpfe Winkel ist so gewählt, daß bei geöffneter Kassette die Aufstellflächen 44 der Rippen mit dem Aufstellboden 12 der Stützklappe fluchten. Durch diese weitere Ausbildung wird ein Einklemmen von Disketten oder anderen plattenförmigen Gegenständen zwischen Aufstellboden und Schwenkdeckel verhindert.

Um das Einführen der Disketten oder anderer plattenförmiger Gegenstände in das Aufnahmefach 14 nicht zu behindern, sind die Stege 35 nach oben abgeschrägt, weisen also einen etwa dreieckförmigen Querschnitt auf.

Der Schwenkdeckel 3 weist an seinem vorderen und seitlichen Rand einen schmalen, die Seitenwände außen übergreifenden, nach unten zeigenden Randstreifen 45 auf. Die Breite dieses Randstreifens entspricht an den Seiten des Schwenkdeckels der Höhe der Seitenwand-Erhöhung 21, 22 des Unterkastens 2. Die Länge des Randstreifens 45 ist so bemessen, daß dieser im geschlossenen Zustand des Schwenkdeckels bündig an die Erhöhung 21, 22 des Unterkastens anschließt. Zweckmäßig weisen der Randstreifen 45 an seinen hinteren Enden und die Seitenwand-Erhöhungen 21, 22 an den vorderen Enden zueinander komplementäre Abschrägungen 46 und 47 auf. Das rückseitige Ende des Randstreifens ist dabei nach unten und nach vorn und das vordere Ende der Erhöhung nach hinten abgeschrägt. Die beiderseitigen Enden des Randstreifens 45 bilden gleichzeitig Anschlagflächen 48, mit denen sich der Schwenkdeckel 3 im aufgeklappten Zustand auf den Erhöhungen 21 und 22 der Seitenwände des Unterkastens abstützt, wodurch gleichzeitig die Stellung im aufgeklappten Zustand festgelegt ist.

Im geschlossenen Zustand kann der Schwenkdeckel mit dem Unterkasten verriegelt werden. Hierzu weist der Schwenkdeckel an seiner Vorderseite eine nach unten abstehende Lasche 50 auf, die innenseitig eine Nase 51 aufweist. In der Vorderwand 5 des Unterkastens 2 ist eine federnde Taste 52 vorgesehen, die ein Verriegelungselement 53 aufweist, in das die Lasche 50 mit der Nase 51 lösbar eindrückbar ist. Das Verriegelungselement ist in Form eines Bügels 54 ausgebildet, der fest an der Innenseite der Taste 52 angebracht ist. Unterhalb des Bügels ist in der Vorderwand 5 eine Federkammer 55 ausgebildet, in dem eine Druckfeder 56 sitzt, die mit einem Teil 57 durch den Bügel 54 hindurchragt. Die Druckfeder 56 weist ferner seitliche, unterhalb des Teiles 57 angeordnete Vorsprünge 58 auf, die unterhalb des Bügels angeordnet sind und in der Offen-

0210368

stellung der Kassette an der Unterseite des Bügels anliegen. Hierdurch wird ein Herausfallen der Druckfeder aus dem Bügel verhindert. Die Taste 52 selbst ist in Verriegelungsrichtung druckbeaufschlagt vermittels einer federnd im Bereich der Vorderwand 5 des Unterkastens 2 angeordneten Lasche 59. Zum Verschließen der Kassette 1 wird der Schwenkdeckel 3 nach unten geklappt. Die Stirnfläche der Lasche 50 legt sich auf die Oberseite der Druckfeder 56. Durch Druck nach unten wird die Feder auf diese Weise heruntergedrückt, die Lasche 50 so weit in den Bügel hineingedrückt, bis die Nase 51 unter dem Bügel 54 einrastet. Hierdurch ist die Kassette verriegelt. Durch Druck von vorn auf die Taste 52 gegen die Wirkung der federnden Lasche 59 wird der Bügel nach innen gedrückt, wodurch die Nase 51 freikommt und der Deckel durch die Druckfeder 56, die auf die Stirnfläche der Lasche 50 drückt, um ein geringes Maß aufgedrückt wird. Der Deckel kann dann leicht weiter von Hand nach oben geschwenkt werden.

Beim weiteren nach oben Verschwenken bleibt das Aufnahmefach 14 zunächst geschlossen, d.h. daß die Stützklappe 4 nicht vom Schwenkdeckel 3 wegschwenkt. Das Aufnahmefach 14 bleibt solange geschlossen, solange die kreisbogenförmigen Kufen der Stützklappe auf dem Boden des Unterkastens 2 gleiten und sich die durch die Zapfen der Stützklappe hindurchgehende Drehachse der Stützklappe infolge der Schwenkbewegung des Schwenkdeckels dem Boden des Unterkastens nähert. Wenn etwa die halbe Offenstellung erreicht ist, die in der Fig. 4 dargestellt ist, und die Kufen der Stützklappe beim Weiterverschwenken sich vom Boden des Unterkastens abheben, erfolgt eine gegenläufige Schwenkbewegung der Stützklappe, wodurch der Schwenkdeckel und die Stützklappe voneinander weg schwenken und das Aufnahmefach 14 geöffnet wird, vgl. Fig. 3. In den Fig. 4 und 3 sind die jeweiligen Schwenkrichtungen in den Bewegungsphasen durch Pfeile angedeutet.

Die Stege 35 sind außer mit den Seitenwänden 9 und 10 des Schwenkdeckels mit der Deckelinnenfläche verbunden. Die hintere Kante des Schwenkdeckels ist leicht nach unten abgeknickt ausgebildet. Die Rippen 41, 42 und 43 sind so ausgebildet, daß sie sowohl mit der Deckelfläche als auch mit dem abgeknickten Randbereich verbunden sind.

Die Fig. 8 zeigt eine Doppelkassette mit zwei Aufnahmefächern 14', 14'', die voneinander durch eine Trennwand 70 getrennt sind. Die Trennwand wird von einer am Schwenkdeckel 3 angebrachten Zwischenwand 72 und zwei eng beabstandeten, an der Stützklappe 4 angebrachten Mittelwänden 74, 76 gebildet. Die Zwischenwand 72 entspricht den Seitenwänden 9, 10 des Schwenkdeckels. Die Mittelwände 74, 76 entsprechen den Seitenwänden 11, 12 der Stützklappe. Sie weisen wie diese Stützklappe Kufen 15' und 15'' auf, die auf dem Boden 16 des Unterkastens gleiten. Der Abstand der beiden Mittelwände entspricht etwa der Stärke der Zwischenwand oder ist geringfügig größer. Die Mittelwände weisen jeweils V-förmige Ausnehmungen 33' auf, die den V-förmigen Ausnehmungen der Seitenwände der Stützklappe entsprechen. In diese V-förmigen Ausnehmungen 33' greifen beiderseits auf der Zwischenwand 72 angebrachte Stege 35' wie bei den Seitenwänden einschiebbar ein.

Dipl.-Ing. Sigurd Leine · Dipl.-Phys. Dr. Norbert König

Burckhardtstraße 1          Telefon (05 11) 62 30 05
D-3000 Hannover 1

HAN-BÜROGERÄTE GmbH & Co.KG

Unser Zeichen          Datum

726/3 EP          20. Mai 1986

A n s p r ü c h e

1. Kassette zur Aufnahme von plattenförmigen Gegenständen, insbesondere von Disketten, mit einem Unterkasten, einem drehbar im Unterkasten angeordneten Schwenkdeckel, der mit Seitenwänden, einer Vorderwand und einer Rückwand versehen ist, einer drehbar im Schwenkdeckel angeordneten Stützklappe, die Seitenwände und einen Aufstellboden aufweist, dadurch gekennzeichnet, daß im Rand des Aufstellbodens (13) der Stützklappe (4) Ausnehmungen (38, 39, 40) vorgesehen sind, in die am Schwenkdeckel (3) angeformte Vorsprünge (41, 42, 43) eingreifen, und daß die Seitenwände (11, 12) der Stützklappe (4) Ausnehmungen (33   ) aufweisen, in die auf der Innenseite der Seitenwände (9, 10) des Schwenkdeckels (3) angebrachte Stege (35   ) eingreifen.

2. Kassette nach Anspruch 1, dadurch gekennzeichnet, daß die Seitenwände (11, 12) der Stützklappe (4) über den Aufstellboden (13) hinaus zu kreisförmigen Kufen (15) verlängert sind, die auf der Bodenfläche des Unterkastens (2) gleiten.

3. Kassette nach Anspruch 2, dadurch gekennzeichnet, daß jede Kufe (15) im Bereich der Kante (37) des Aufstellbodens (13) einen außenseitig angeordneten Zapfen (27, 28)

Dr.K./H.          -2-

aufweist, der in eine komplementäre Ausnehmung (29, 30), die in der Seitenwand (9, 10) des Schwenkdeckels (3) nahe dessen hinterer Kante ausgebildet ist, einführbar ist zur drehbaren Verbindung von Stützklappe (4) und Schwenkdeckel (3).

4. Kassette nach Anspruch 2 oder 3, dadurch gekennzeichnet, daß die kreisförmigen Gleitflächen der Kufen (15) im geschlossenen Zustand des vom Schwenkdeckel und der Stützklappe gebildeten Aufnahmefaches (14), d.h. bei an den Schwenkdeckel herangeklappter Stützklappe, auf einem Kreisbogen um die Drehachse (17, 18) des Schwenkdeckels (3) als Kreismitte liegt.

5. Kassette nach einem der vorhergehenden Ansprüche, dadurch gekennzeichnet, daß der Schwenkdeckel (3) seitlich je eine Anschlagfläche (48, 49) aufweist zur Auflage auf den oberen Rand des Unterkastens (2) und zur Begrenzung der Schwenkbewegung in Öffnungsrichtung.

6. Kassette nach einem der vorhergehenden Ansprüche, dadurch gekennzeichnet, daß der Aufstellboden (13) der Stützklappe (4) mit der Stützklappe (4) einen stumpfen Winkel bildet, der dem Winkel zwischen Stützklappe (4) und dem Boden des Unterkastens (2) in der Offenstellung des Aufnahmefaches (14) entspricht.

7. Kassette nach einem der vorhergehenden Ansprüche, dadurch gekennzeichnet, daß die Vorsprünge (41, 42, 43) eine obere Fläche aufweisen, die unter einem stumpfen Winkel zum Schwenkdeckel (3) verläuft, die dem stumpfen Schwenkwinkel zwischen Schwenkdeckel (3) und Boden des Unterkastens (2) entspricht, derart, daß der Aufstellboden (13) der Stützklappe (4) und die obere Fläche der Vorsprünge (41, 42, 43) in der Offenstellung der Aufnahmefaches (14) in einer Ebene liegen.

8. Kassette nach Anspruch 7, dadurch gekennzeichnet,
daß die obere Fläche der Vorsprünge gerippt ausgebildet
ist.

9. Kassette nach Anspruch 1, 7 oder 8, dadurch gekennzeichnet, daß die Vorsprünge jeweils aus Gruppen von
Rippen bestehen.

10. Kassette nach einem der vorhergehenden Ansprüche,
dadurch gekennzeichnet, daß die Stege (35    ) der Seitenwände (9, 10) des Schwenkdeckel (3) etwa senkreicht zur
Fläche des Schwenkdeckels verlaufen.

11. Kassette nach Anspruch 10, dadurch gekennzeichnet,
daß die Stege (35    ) mit der Innenfläche des Schwenkdeckels verbunden sind.

12. Kassette nach einem der vorhergehenden Ansprüche,
dadurch gekennzeichnet, daß die Ausnehmungen (33    ) in
den Seitenwänden (11, 12) der Stützklappe (4) V-förmig
ausgebildet sind.

13. Kassette nach Anspruch 1, 10 oder 11, dadurch gekennzeichnet, daß die Stege (35    ) nach oben zu den Seitenwänden (9, 10) des Schwenkdeckels (3) hin abgeschrägt ausgebildet sind.

14. Kassette nach einem der vorhergehenden Ansprüche,
dadurch gekennzeichnet, daß zur Verriegelung des Schwenkdeckels in der Vorderwand (5) des Unterkastens (2) eine federnde Taste (52) mit einem Verriegelungselement (53) angeordnet ist, in das eine am Schwenkdeckel ausgebildete und vom Schwenkdeckel abstehende Lasche (50) mit daran angebrachter Nase (51) lösbar einrastbar ist.

15. Kassette nach Anspruch 14, dadurch gekennzeichnet, daß das Verriegelungselement (53) in Form eines an der Taste (52) angeformten Bügels (54) ausgebildet ist, in dessen Öffnung die Lasche einschiebbar ist und hinter den die Nase (51) im geschlossenen Zustand der Kassette greift.

16. Kassette nach Anspruch 14 oder 15, dadurch gekennzeichnet, daß zum Auslösen des Schwenkdeckels zwecks Öffnens eine den Schwenkdeckel mit Druck beaufschlagende, im Unterkasten angeordnete Feder (56) vorgesehen ist.

17. Kassette nach Anspruch 16, dadurch gekennzeichnet, daß die Druckfeder (56) die Lasche (50) des Schwenkdeckels (3) beaufschlagt.

18. Kassette nach Anspruch 16 oder 17, dadurch gekennzeichnet, daß die Druckfeder (56) in einer Federkammer (55) der Vorderwand (5) des Unterkastens (2) angeordnet ist und im entlasteten Zustand mit Teilen (57) im vom Bügel (54) eingeschlossenen Raum angeordnet ist oder aus diesem Raum hervorragt.

19. Kassette nach einem der Ansprüche 16 - 18, dadurch gekennzeichnet, daß die Druckfeder (56) seitliche, die Bügelöffnung überragende, unterhalb des Bügels (54) angeordnete Vorsprünge (58) aufweist, die ein Herausfallen der Feder aus dem Bügel verhindert.

20. Kassette nach Anspruch 19, dadurch gekennzeichnet, daß die Vorsprünge (58) im entlasteten Zustand der Druckfeder an der Unterseite des Bügels (54) anliegen.

21. Kassette nach einem der Ansprüche 14 - 20, dadurch gekennzeichnet, daß die Taste (52) in Verriegelungsrichtung druckbeaufschlagt ist.

22. Kassette nach Anspruch 21, dadurch gekennzeichnet, daß die Taste an einer federnd im Bereich der Vorderwand (5) des Unterkastens (2) angeordneten Lasche (59) anliegt.

23. Kassette nach einem der vorhergehenden Ansprüche, dadurch gekennzeichnet, daß die Seitenwände (7, 8) des Unterkastens (2) jeweils im hinteren Bereich etwa um die Breite einer nach vorn und einwärts offenen Kulissenführung (23, 24) erhöht ausgebildet sind, in die auf der Außenseite der Seitenwände (9, 10) des Schwenkdeckels (3) angebrachte Zapfen (17, 18) einschiebbar sind und die jeweils in einem Lager (19) enden, das unterhalb der Kulissenführung angeordnet ist und in das der zugeordnete Zapfen einrastend einschiebbar ist.

24. Kassette nach Anspruch 23, dadurch gekennzeichnet, daß der Schwenkdeckel (3) mit einem die Seitenwände (9,10) außen übergreifenden schmalen, nach unten zeigenden Randstreifen (45) versehen ist, dessen Breite der Höhe der Seitenwänderhöhung des Unterkastens (2) entspricht, und der im geschlossenen Zustand des Schwenkdeckels bündig an die Seitenwanderhöhung des Unterkastens anschließt.

25. Kassette nach einem der vorhergehenden Ansprüche mit zwei nebeneinander angeordneten Aufnahmefächern für plattenförmige Gegenstände, insbesondere Disketten, dadurch gekennzeichnet, daß die Aufnahmefächer (14', 14'')

durch eine Trennwand (70) getrennt sind, die von einer am Schwenkdeckel (3) angeordneten, den Seitenwänden des Schwenkdeckels entsprechenden Zwischenwand (72) und zwei beabstandeten, den Seitenwänden der Stützklappe (4) entsprechenden und mit den Kufen der Seitenwände entsprechenden Kufen (15', 15'') versehenen Mittelwänden (74, 76) gebildet wird, zwischen denen die Zwischenwand einschiebbar angeordnet ist, wobei beide Mittelwände V-förmige, den Ausnehmungen der Seitenwände entsprechende Ausnehmungen (33') aufweisen, in die beiderseits auf der Zwischenwand angeordnete, den Stegen der Seitenwände des Schwenkdeckels entsprechende Stege (35') einschiebbar eingreifen.

Fig. 1

Fig. 2

2/8

3
45
17
21 25
23 19
29
18 24
22
7
2
30
16

0210368

Fig.4

Fig. 5

0210368

*Fig. 6*

Fig. 7

Fig. 8

**Europäisches Patentamt**

# EUROPÄISCHER RECHERCHENBERICHT

## EINSCHLÄGIGE DOKUMENTE

EP 86107071.2

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| A | FR - A - 1 229 166 (FLEX) <br> * Fig. 2; Seite 2, Spalte 2 * <br> -- | 1 | G 11 B 33/04 |
| A | EP - A2 - 0.142 088 (BASF) <br> * Fig. 1; Zusammenfassung * <br> -- | 1 | |
| D,A | EP - A1 - 0 130 266 (STADELMANN) <br> * Fig. 1; Zusammenfassung * <br> -- | 1 | |
| D,A | DE - C - 1 176 095 (FERMATA) <br> * Fig. 1b; Ansprüche 1,2 * <br> -- | 1 | |
| D,A | US - A - 4 478 335 (LONG) <br> * Fig. 4; Zusammenfassung * <br> ---- | 1 | |

**RECHERCHIERTE SACHGEBIETE (Int Cl 4)**

G 11 B 33/00

G 11 B 23/00

B 65 D 85/00

B 65 D 25/00

B 42 F 17/00

Der vorliegende Recherchenbericht wurde für alle Patentansprüche erstellt.

| Recherchenort | Abschlußdatum der Recherche | Prüfer |
|---|---|---|
| WIEN | 12-11-1986 | BERGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82